# EUROPÄISCHE PATENTSCHRIFT

(11) **EP 1 525 411 B1**
(45) Veröffentlichungstag und Bekanntmachung des Hinweises auf die Patenterteilung: **21.06.2006**
(21) Anmeldenummer: 03783927.1
(22) Anmeldetag: 25.07.2003
(51) Int. Cl.: F16H 1/14

(54) **KEGELRADGETRIEBE**
BEVEL GEAR TRANSMISSION
ENGRENAGE A PIGNONS CONIQUES

(30) Priorität: 26.07.2002 DE 10234331
(43) Veröffentlichungstag der Anmeldung: 27.04.2005
(73) Patentinhaber: INKOMA MASCHINENBAU GMBH, 38162 Schandelah (DE)
(72) Erfinder: OBERMEIER, Manfred, 38302 Wolfenbüttel (DE)
(74) Vertreter: Lins, Edgar
(86) Internationale Anmeldenummer: PCT/DE2003/002532
(87) Internationale Veröffentlichungsnummer: WO 2004/015301

(56) Entgegenhaltungen:
- FR-A- 1 298 734
- GB-A- 1 112 245
- US-A- 3 826 151
- US-A- 4 248 487
- US-A- 5 743 145

## Beschreibung

Die Erfindung betrifft ein Kegelradgetriebe mit einem Getriebegehäuse, dessen Wände mit wenigstens zwei Durchgangsöffnungen für wenigstens zwei mit ihren Verzahnungen innerhalb des Getriebegehäuses ineinander greifende Kegelräder versehen sind, von denen wenigstens eines eine in einem Lager eines Lagergehäuses drehbar gelagerte Welle aufweist, die aus dem Getriebegehäuse durch die Durchgangsöffnung hinausragt, wobei das Lagergehäuse an einer Außenseite des Getriebegehäuses befestigt ist.

Derartige Kegelradgetriebe werden in zahlreichen Ausführungsformen und Größen benötigt. Für ihre Funktion und Lebensdauer ist es wesentlich, dass die Verzahnungen der Kegelräder genau in der vorgesehenen Weise ineinander greifen. Hierfür ist es wichtig, dass die regelmäßig senkrecht zueinander stehenden Kegelräder in einer genauen Winkellage lagegenau bezüglich der Position der Drehachse und insbesondere lagegenau in axialer Postition erfolgt.

Es ist bekannt, die Kegelräder mit ihren Achsen in einem Lagergehäuse zu lagern, das an der Außenseite des Getriebegehäuses genau positioniert mittels eines Flansches und entsprechender Verschraubungen positioniert wird, sodass das durch das Lagergehäuse gelagerte Kegelrad durch die Durchgangsöffnung in das Innere des Getriebegehäuses ragt. Die Winkelpositionierung und die Lagepositionierung bezüglich der Lage der Drehachse gelingt dabei mit ausreichender Genauigkeit. Problematisch sind die Fertigungstoleranzen bezüglich der Positionierung des Kegelrades in axialer Lage bezüglich der Drehachse. Bereits geringe Abweichungen von der axialen Sollposition des Kegelrades führen entweder zu einem zu starken Andruck zwischen den kämmenden Kegelrädern, und damit zu einem schwergängigen Getriebe und zu einem verstärkten Verschleiß der Zähne, oder zu einem Spiel zwischen den kämmenden Zähnen, das einerseits zu einer Geräuschentwicklung und andererseits ebenfalls zu einem erhöhten Verschleiß führt. Es ist daher üblich, bei der Montage eines Kegelradegetriebes mit Toleranzblechen zu arbeiten, die zwischen dem Lagergehäuse und dem Getriebegehäuse eingelegt werden, um die axiale Position des im Lagergehäuse gelagerten Kegelrades zu justieren. Die Stärken der Toleranzbleche sind dabei unterschiedlich und betragen zwischen 1/100 mm und 1/10 mm. Die einwandfreie Montage eines derartigen Kegelradegetriebes setzt somit erhebliche Erfahrungen voraus, da sich die axiale Position der Kegelräder beim Anziehen der Schrauben zur Befestigung des Lagergehäuses an dem Getriebegehäuse um einige 1/100 mm ändert, was von der das Kegelradgetriebe montierenden Person vorab beim Zusammenhalten der kämmenden Kegelräder durch Abschätzung berücksichtigt werden muss. Dies führt dazu, dass eine exakte und genau reproduzierbare Montage der Kegelradgetriebe einer Serie nicht möglich ist, sodass die montierten Kegelradgetriebe durchaus unterschiedliche Laufeigenschaften und Lebensdauern aufweisen. Ferner ist es erforderlich, für die durchgängig nach der beschriebenen Art erfolgenden Montage der Kegelradgetriebe möglichst erfahrene Fachkräfte einzusetzen.

Ein kegelradgetriebe mit den Merkmalen des Oberbegriffs des Anspruchs 1 is bekannt aus US 4248487.

Bei dem aus der US 4,248,487 bekannten Kegelradgetriebe wird eine axiale Verstellung in ähnlicher Weise dadurch durchgeführt, dass das Lagergehäuse in das Getriebegehäuse mit einem Gewinde eingeschraubt ist, sodass das Lagergehäuse durch Drehung in dem Getriebegehäuse axial verstellbar ist. Wenn die gewünschte axiale Position erreicht ist, wird diese durch einen Verriegelungsring, der auf das Außengewinde des Lagergehäuses bis zur axialen Anlage an dem Getriebegehäuse aufgeschraubt wird, gesichert wird. Beim Aufschrauben des Verriegelungsrings ist auch hier eine geringfügige Verstellung des Getriebegehäuses nicht vermeidbar, sodass die gewünschte einfache und genau reproduzierbare Montage und Justierung des Kegelradgetriebes nicht möglich ist.

Der vorliegenden Erfindung liegt die Aufgabe zugrunde, ein Kegelradgetriebe der eingangs erwähnten Art so auszubilden, dass unter Beibehaltung der Stabilität der Konstruktion eine Vereinfachung und eine verbesserte Reproduzierbarkeit der Montage erreicht wird.

Zur Lösung dieser Aufgabe ist erfindungsgemäß ein Kegelradgetriebe der eingangs erwähnten Art dadurch gekennzeichnet, dass an dem Getriebegehäuse ein separat von dem Lagergehäuse ausgebildetes Befestigungsteil befestigt ist, das ein Innengewinde aufweist, in dem ein Außengewinde des Lagergehäuses nach der Befestigung des Befestigungsteils an dem Getriebegehäuse zur axialen Verstellung des Lagergehäuses drehbar ist, dass die relative Winkelposition zwischen Befestigungsteil und Lagergehäuse fixierbar ist und dass das Lagergehäuse im montierten Zustand mit einem zylindrischen Ansatz passig in die als Führung ausgebildete betreffende Durchgangsöffnung des Getriebegehäuses ragt.

Bei dem erfindungsgemäßen Kegelradgetriebe ist die axiale Verstellung der Position des Kegelrades dadurch möglich, dass die Position des das Kegelrad lagemden Lagergehäuses relativ zu dem Getriebegehäuse veränderbar ist, indem das Lagergehäuse in dem Gewinde zum am Getriebegehäuse fixierten Befestigungsteil gedreht wird. Dabei entsteht der wesentliche Vorteil, dass die Verstellung der axialen Position des Kegelrades erfolgt, nachdem die Befestigung des Befestigungsteils an dem Getriebegehäuse erfolgt ist, sodass durch diese Befestigung nach der Justierung keine Positionsveränderung mehr eintritt. Um Instabilitäten der Konstruktion zu vermeiden, die auftreten könnten, wenn die Befestigung des Lagergehäuses ausschließlich über die Gewindeverbindung zum Befestigungsteil erfolgte, ist erfindungsgemäß vorgesehen, dass das Lagergehäuse im montierten Zustand mit einem zylindrischen Ansatz passig in die Durchgangsöffnung ragt und somit durch die Durchgangsöffnung des Getriebegehäuses über die Dicke der Wand, in der sich die Durchgangsöffnung befindet, zusätzlich geführt wird. Auf diese Weise gelingt eine hochgenaue und stabile Winkel- und Lagepositionierung der Drehachse des Kegelrades neben der ebenfalls hochgenauen und reproduzierbaren Einstellbarkeit der axialen Position des Kegelrades.

In einer bevorzugten Ausführungsform der Erfindung ist das Befestigungsteil als Flanschring ausgebildet. Das Lagergehäuse kann zweckmäßiger Weise eine zylindrische Form aufweisen.

Die Fixierung der Winkelstellung zwischen Flanschring und Lagergehäuse kann in einfacher Weise dadurch erfolgen, dass eine Schraube in ein radiales Gewindeloch des Flanschrings einschraubbar ist und so den Flanschring durch Klemmung relativ zum Lagergehäuse fixiert. Alternative Fixierungen der Winkelstellung ergeben sich durch Klebung, Kontern mit einer Kontermutter o. dgl.

Die Erfindung soll im Folgenden anhand eines in der Zeichnung dargestellten Ausführungsbeispiels näher erläutert werden. Es zeigen:
- Figur 1: eine schematische explodierte Darstellung der Teile eines Kegelradgetriebes
- Figur 2: eine Schnittdarstellung des montierten Kegelradgetriebes gemäß Figur 1.

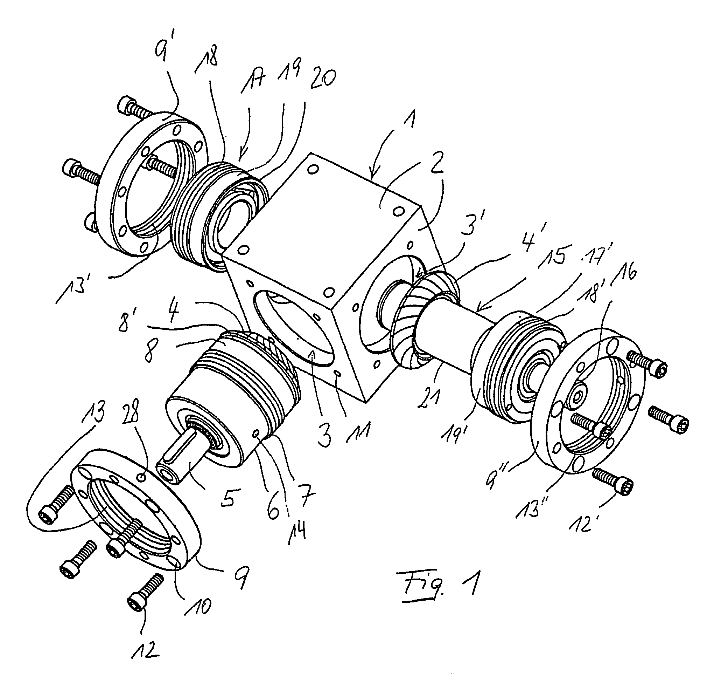

Figur 1 lässt ein würfelförmiges Getriebegehäuse 1 mit sechs Seitenwänden 2 erkennen.

In dem dargestellten Ausführungsbeispiel weisen drei Seitenwände 2 Durchgangsöffnungen 3, 3' auf. Zwei der Durchgangsöffnungen 3, 3' fluchten miteinander, befinden sich somit in gegenüberliegenden Seitenwänden 2 des Getriebegehäuses 1. Die andere Durchgangsöffnung 3 befindet sich in einer Wand 2 des Getriebegehäuses 1, die den beiden gegenüberliegenden Seitenwänden 2 mit den Durchgangsöffnungen 3' benachbart ist.

Zu der Durchgangsöffnung 3 gehört ein Kegelrad 4 mit einer damit verbundenen Welle 5. Das Kegelrad 4 kann durch die Durchgangsöffnung 3 in das Innere des Getriebegehäuses 1 ragen und dort mit einem Kegelrad 4' kämmen, dessen Drehachse senkrecht zu der Drehachse des Kegelrades 4 steht. Das Kegelrad 4 ist mit seiner Welle 5 in einem zylindrischen Lagergehäuse 6 gelagert, das an seiner Außenseite einen radial etwas vorstehenden Gewindeabschnitt 7 aufweise. Der Gewindeabschnitt 7 weist einen Außendurchmesser auf, der größer als der Durchmesser der Durchgangsöffnung 3 ist. Zwischen dem Gewindeabschnitt 7 und dem Kegelrad 4 befindet sich ein zylindrischer Ansatz 8 des Lagergehäuses, dessen Außendurchmesser dem Innendurchmesser der Durchgangsöffnung 3 entspricht. In eine umlaufende Nut des Ansatzes 8 ist ein O-Ring 8' eingelegt, mit dem eine Abdichtung der Durchgangsöffnung 3 hergestellt wird.

Zur Befestigung des Lagergehäuses 6 an dem Getriebegehäuse 1 dient ein als Flanschring ausgebildetes Befestigungsteil 9, das mit Durchgangsbohrungen 10 versehen ist, die mit Gewinde-Sackbohrungen 11 in der die Durchgangsöffnung 3 aufweisenden Wand 2 des Getriebegehäuses 1 fluchten, sodass der Flanschring 9 mittels herkömmlicher Schrauben 12 an das Getriebegehäuse 1 anschraubbar ist. Der Flanschring 9 weist ein Innengewinde 13 auf, das zur Aufnahme des Außengewindes auf dem Gewindeabschnitt 7 des Lagergehäuses 6 ausgebildet ist. Zur Drehung des Lagergehäuses 6 in dem Innengewinde 13 des Flanschrings 9 mittels eines Werkzeugs befinden sich an dem Lagergehäuse 6 zwei einander gegenüberliegende Sackbohrungen 14, in die ein geeigneter Hakenschlüssel eingreifen kann. Alternativ können die Sackbohrungen 14 beispielsweise auch durch Flächen für einen Maulschlüssel o. dgl. ersetzt werden.

Das zweite Kegelrad 4' befindet sich auf einer Welle 15, die ein aus dem Getriebegehäuse 1 herausragendes Abtriebsende 16 aufweist. Das andere Ende der Welle 15 ist in einem Lagerteil 17 gelagert, das in ähnlicher Weise wie das Lagergehäuse 6 mit einem Gewindeabschnitt 18 und einem zylindrischen Ansatz 19 mit einem O-Ring 20 versehen ist. Das Lagerteil 17 wird mit einem Flanschring 9', der ebenfalls mit einem Innengewinde 13' versehen ist, in gleicher Weise wie das Lagergehäuse 6 an dem Getriebegehäuse 1 befestigt.

Auf der anderen Seite des Kegelrades 4' schließt sich an einen zylindrischen Abschnitt 21 der Welle 15, dessen Länge etwa der Breite des Kegelrades 4' entspricht, ein Lagerteil 17' an, das in gleicher Weise mit einem Gewindeabschnitt 18' und einem zylindrischen Ansatz 19' ausgebildet ist. Die Befestigung erfolgt mit einem Flanschring 9", der mit einem Innengewinde 13" versehen ist, über Schrauben 12'.

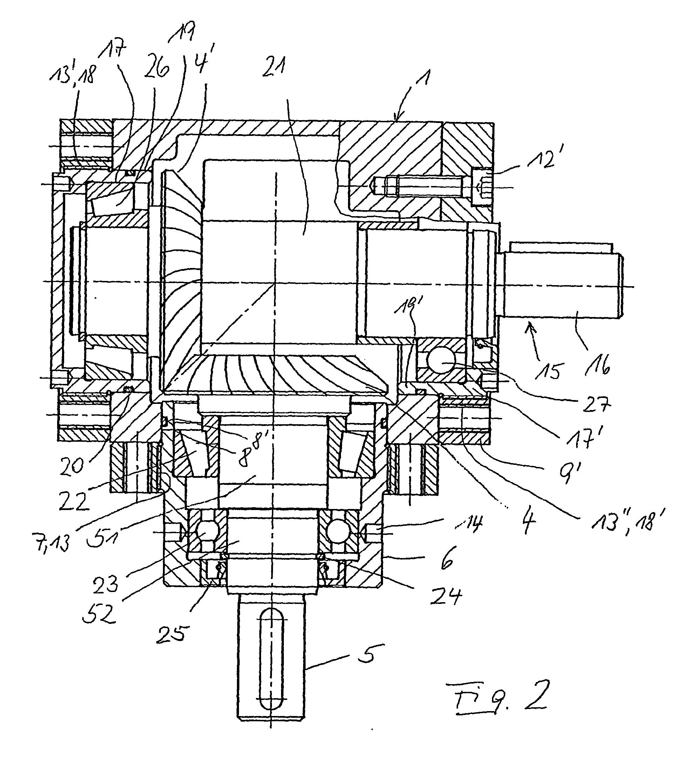

Figur 2 verdeutlicht den montierten Zustand in einer Schnittdarstellung. Dabei ist erkennbar, dass die zum Kegelrad 4 gehörende Welle 5 mit zwei abgestuften Abschnitten 51, 52 im Lagergehäuse 6 gelagert ist, und zwar in der dargestellten Aufführungsform der Abschnitt 51 mit einem Kegelrollenlager 22 und der Abschnitt 52 mit einem Kugellager 23. Die axiale Festlegung der Welle 5 in dem Lagergehäuse 6 erfolgt mittels eines in eine Nut eingreifenden Sprengrings 24. Zum axialen Ausgang des Lagergehäuses 6 ist die Welle 5 mittels einer Dichtanordnung 25 abgedichtet.

Das in dem Lagerteil 17 gelagerte Ende der Welle 15 ist mit einem Kegelrollenlager 26 gelagert, während die Welle 15 in dem Lagerteil 17' mit einem Kugellager 27 gelagert ist.

Es ist erkennbar, dass die axiale Position des Kegelrades 4 mittels der Gewindeverbindung 7, 13 durch Drehung des Lagergehäuses 6 einstellbar ist. Die Drehung erfolgt, nachdem der Flanschring 9 fest an das Getriebegehäuse 1 angeschraubt worden ist, ggf. mittels eines in die Sackbohrungen 14 eingreifenden Werkzeugs. Nachdem die axiale Stellung justiert worden ist, wird die relative Position zwischen Lagergehäuse 6 und Ringflansch 9 fixiert, indem beispielsweise eine Madenschraube in eine radiale durchgehende Gewindebohrung 28 des Flanschrings 9 (Figur 1) eingeschraubt wird und klemmend gegen die Außenseite des Lagergehäuses 6 drückt.

In gleicher Weise ist die axiale Position des Kegelrades 4' durch die Gewindeverbindung 13", 18' einstellbar. Mit der Gewindeverbindung 13', 18 ist lediglich die axiale Position des Lagerteils 17 einstellbar, die aber im Normalfall nicht kritisch ist.

Es ist erkennbar, dass die axialen Positionen der mit ihren Verzahnungen kämmenden Kegelräder 4, 4' genau und reproduzierbar über die Gewindeverbindungen 7, 13 und 13", 18' einstellbar sind. Durch die Führung der Ansätze 8, 19' in der jeweiligen Durchgangsöffnung 3, 3' wird die Stabilität der Konstruktion hinsichtlich der Winkel- und Lagegenauigkeit der Drehachsen der Kegelräder 4, 4' gewährleistet.

## Patentansprüche

1. Kegelradgetriebe mit einem Getriebegehäuse (1), dessen Wände (2) mit wenigstens zwei Durchgangsöffnungen (3, 3') für wenigstens zwei mit ihren Verzahnungen innerhalb des Getriebegehäuses (1) ineinander greifende Kegelräder (4, 4') versehen sind, von denen wenigstens eines eine in einem Lager (22, 23) eines Lagergehäuses (6) drehbar gelagerte Welle (5) aufweist, die aus dem Getriebegehäuse (1) durch die Durchgangsöffnung (3) hinausragt, wobei das Lagergehäuse (6) an dem Getriebegehäuse (1) befestigt ist, **dadurch gekennzeichnet, dass** an dem Getriebegehäuse (1) ein separat von dem Lagergehäuse (6) ausgebildetes Befestigungsteil (9) befestigt ist, das ein Innengewinde (13) aufweist, in dem ein Außengewinde (7) des Lagergehäuses (6) nach der Befestigung des Befestigungsteils (9) an dem Getriebegehäuse (1) zur axialen Verstellung des Lagergehäuses (6) drehbar ist, dass die relative Winkelposition zwischen Befestigungsteil (9) und Lagergehäuse (6) fixierbar ist und dass das Lagergehäuse (6) im montierten Zustand mit einem zylindrischen Ansatz (8) passig in die als Führung ausgebildete betreffende Durchgangsöffnung (3) des Getriebegehäuses (1) ragt.

2. Kegelradgetriebe nach Anspruch 1, **dadurch gekennzeichnet, dass** das Befestigungsteil (9) als Flanschring ausgebildet ist.

3. Kegelradgetriebe nach Anspruch 2, **dadurch gekennzeichnet, dass** zur Fixierung der Winkelstellung zwischen Flanschring (9) und Lagergehäuse (6) eine Schraube in ein radiales Gewindeloch (28) des Flanschrings (9) einschraubbar ist.

4. Kegelradgetriebe nach einem der Ansprüche 1 bis 3, **dadurch gekennzeichnet, dass** das Lagergehäuse (6) an der Außenseite des Getriebegehäuses (1) befestigt ist.

## Claims

1. Bevel gear transmission with a transmission housing (1), the walls (2) of which are provided with at least two passage orifices (3, 3') for at least two bevel wheels (4, 4') which engage with their toothings one in the other inside the transmission housing (1) and at least one of which has a shaft (5) which is mounted rotatably in a bearing (22, 23) of a bearing housing (6) and which projects out of the transmission housing (1) through the passage orifice (3), the bearing housing (6) being fastened to the transmission housing (1), **characterized in that** the transmission housing (1) has fastened to it a fastening part (9) which is produced separately from the bearing housing (6) and which has an internal thread (13), in which an external thread (7) of the bearing housing (6) is rotatable, for the axial adjustment of the bearing housing (6), after the fastening of the fastening part (9) to the transmission housing (1), **in that** the relative angular position between the fastening part (9) and the bearing housing (6) can be fixed, and **in that**, in the mounted state, the bearing housing (6) projects with a cylindrical extension (8), in a fit, into the respective passage orifice (3) of the transmission housing (1), said passage orifice being designed as a guide.

2. Bevel gear transmission according to Claim 1, **characterized in that** the fastening part (9) is designed as a flanged ring.

3. Bevel gear transmission according to Claim 2, **characterized in that**, to fix the angular position between the flanged ring (9) and the bearing housing (6), a screw can be screwed into a radial threaded hole (28) of the flanged ring (9).

4. Bevel gear transmission according to one of Claims 1 to 3, **characterized in that** the bearing housing (6) is fastened to the outer face of the transmission housing (1).

## Revendications

1. Engrenage à pignons coniques comportant un carter d'engrenage (1) dont les parois (2) comportent au moins deux ouvertures de passage (3, 3') pour au moins deux pignons coniques (4, 4') engrenés l'un avec l'autre, situés à l'intérieur du carter d'engrenage (1) dont l'un au moins présente un arbre (5) monté en rotation dans un palier (22, 23) d'un boîtier de palier (6) et qui fait saillie à l'extérieur du carter d'engrenage (1) par l'ouverture de passage (3), le boîtier de palier (6) étant fixé au carter d'engrenage (1), **caractérisé en ce qu'**au carter d'engrenage (1) est fixée une partie de fixation (9) qui est séparée du boîtier de palier (6), et présente un filetage intérieur (13) dans lequel est monté en rotation un filetage extérieur (7) du boîtier de palier (6) après fixation de la partie de fixation (9) au carter d'engrenage (1) pour le réglage du boîtier de palier (6), **en ce que** la position angulaire relative entre la partie de fixation (9) et le boîtier de palier (6) peut être fixée et **en ce que** le boîtier de palier (6) fait saillie, à l'état monté avec un embout cylindrique (8) ajusté dans l'ouverture de passage (3) concernée du carter d'engrenage (1) qui est réalisée en tant que guide.

2. Engrenage à pignons coniques selon la revendication 1, **caractérisé en ce que** la partie de fixation (9) est réalisée sous forme d'anneau de bride.

3. Engrenage à pignons coniques selon la revendication 2 **caractérisé en ce que** pour fixer la position angulaire entre l'anneau de bride (9) et le boîtier de palier (6) une vis peut être vissée dans un trou (28) taraudé radialement dans l'anneau de bride (9).

4. Engrenage à pignons coniques selon les revendications 1 à 3 **caractérisé en ce que** le boîtier de palier (6) est fixé sur le côté extérieur du carter d'engrenage (1).
